# EUROPÄISCHE PATENTSCHRIFT

(11) **EP 0 841 129 B1**
(45) Veröffentlichungstag und Bekanntmachung des Hinweises auf die Patenterteilung: **11.09.2002**
(21) Anmeldenummer: 97119248.9
(22) Anmeldetag: 04.11.1997
(51) Int. Cl.: B26B 13/28, F16B 23/00

(54) **Schraubverbindung**
Threaded connection.
Connection taraudée.

(30) Priorität: 05.11.1996 DE 29619179 U
(43) Veröffentlichungstag der Anmeldung: 13.05.1998
(73) Patentinhaber: Johann Kretzer GmbH & Co., 42699 Solingen-Ohligs (DE)
(72) Erfinder: Schallenberg, Manfred,, 42699 Solingen (DE)
(74) Vertreter: Selting, Günther, Dipl.-Ing.

(56) Entgegenhaltungen:
- EP-A- 0 714 738
- DE-U- 9 203 163
- US-A- 3 670 415

## Beschreibung

Die Erfindung bezieht sich auf Schraubverbindungen zum gelenkigen Verbinden zweier Teile mechanischer Instrumente oder Werkzeuge.

Bei mechanischen Instrumenten oder Werkzeugen mit Gelenkverbindungen, beispielsweise bei Scheren, Zangen etc., wird die Gelenkverbindung von einer Gewindeschraube gebildet bzw. gesichert. Bei der Verwendung genormter herkömmlicher Gewindeschrauben weist der Schraubenkopf als Angriffseinrichtung in der Regel einen Schlitz, Kreuzschlitz oder Innensechskant zum Ansatz eines entsprechenden Schraubendrehers auf. Dies hat den Nachteil, daß die Gewindeschraube von jedermann mit einem Schlitz-, Kreuzschlitz- bzw. Sechskantschraubendreher unsachgemäß verstellt oder ganz gelöst werden kann, was erfahrungsgemäß auch häufig geschieht. Um dies zu vermeiden, werden Schrauben verwendet, die nur mit speziellen Schraubendrehern verstellt werden können. In der US-Patentschrift US 3 670 415 ist eine Gelenkverbindung zwischen den beiden zueinander beweglichen Gliedern einer Schere beschrieben, die durch eine Schraube hergestellt wird, deren Schraubenkopf zwei Bohrungen aufweist. Die Schraube kann nur mit einem speziellen Schraubendreher verstellt werden, der in die Bohrungen des Schraubenkopfes passende Stifte aufweist. Um die Gelenkverbindung kippfrei zu machen, muß die Gewindeschraube sehr fest angedreht werden. Dadurch wird die Leichtgängigkeit des Gelenks vermindert.

Aufgabe der Erfindung ist es daher, eine leichtgängige Schraubverbindung zu schaffen.

Diese Aufgabe wird erfindungsgemäß gelöst mit den Merkmalen des Patentanspruchs 1.

Gemäß der Erfindung weist der Schraubenkopf an seiner dem Gewinde zugewandten Seite einen ringartigen Absatz zum Abstützen auf einem Innenring eines Gelenkrollenlagers auf. Während der Innenring eines ein Gelenk bildenden Rollenlagers von dem Absatz des Schraubenkopfes axial fixiert wird, liegt der Außenring des Rollenlagers axial frei und kann sich daher gegenüber dem Schraubenkopf frei drehen. Derartige Gelenke sind sehr leichtgängig und belastbar. Sie müssen jedoch genau eingestellt werden, da schon eine kleine Fehlstellung der Gewindeschraube die Gelenkeigenschaften verschlechtert.

In einer bevorzugten Ausgestaltung ist die Schraubverbindung nur für Gelenkverbindungen von Scheren vorgesehen. Bei diesen Gelenkverbindungen ist die genaue Einstellung der axialen Spannung mittels der Gelenk-Gewindeschraube problematisch, da eine unsachgemäße Einstellung oder Verstellung die Eigenschaften der Schere verschlechtert.

In einer bevorzugten Ausgestaltung sind alle Bohrungen auf demselben Radius und mit den gleichen Winkelabständen zueinander angeordnet. Dadurch kann das Schraubendreher-Werkzeug in verschiedenen Winkeln auf dem Schraubenkopf angesetzt werden, wodurch das Ansetzen des Schraubendreher-Werkzeugs auf dem Schraubenkopf erleichtert wird. Alle Bohrungen können den gleichen Durchmesser aufweisen.

Der Schraubenkopf der Gewindeschraube kann konvex und linsenartig nach außen gewölbt sein. Dadurch hat der Schraubenkopf genügend Stärke, um ein Ausreißen der Bohrungen bei der Übertragung größerer Drehmomente auszuschließen. Gleichzeitig bietet der konvex geformte Schraubenkopf keinerlei hervorragenden Ansatz zum Ansetzen eines anderen Werkzeugs, wie beispielsweise einer Zange.

Die Gewindeschraube besteht vorzugsweise aus Metall, kann jedoch auch aus anderen Materialien, beispielsweise Kunststoff oder Holz, hergestellt sein.

Im folgenden wird unter Bezugnahme auf die Zeichnungen ein Ausführungsbeispiel der erfindungsgemäßen Gewindeschraube dargestellt.

Es zeigen:
- Fig. 1: eine Schere mit einer eine Gelenkverbindung bildenden Gewindeschraube in Draufsicht,
- Fig. 2: ein Schraubendreher-Werkzeug zum Drehen der Gewindeschraube der Fig. 1, und
- Fig. 3: einen Querschnitt durch das Gelenk der Schere der Fig. 1, mit aufgesetztem Schraubendreherwerkzeug.

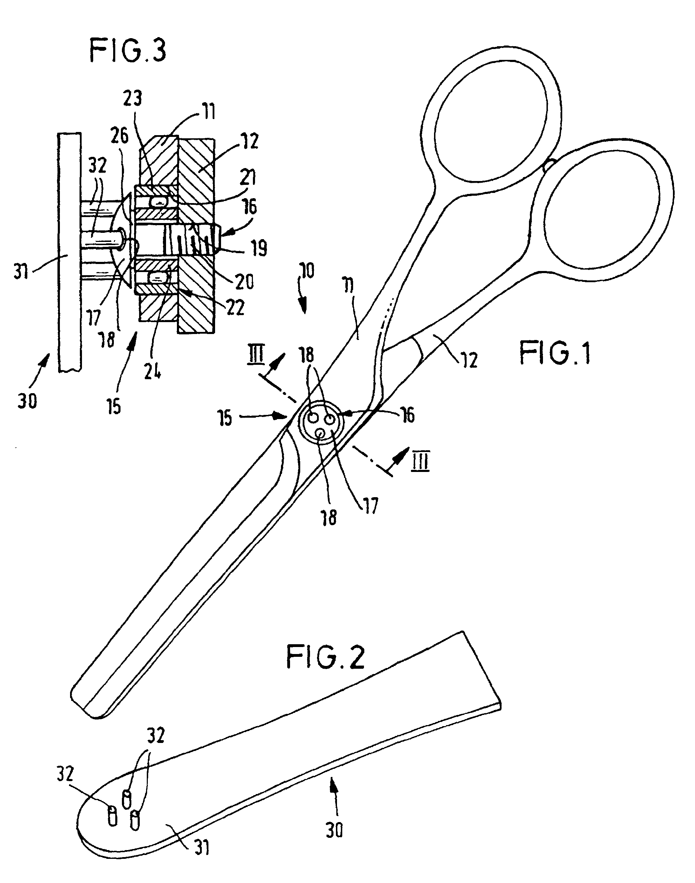

In Figur 1 ist als mechanisches Instrument eine handelsübliche zweiteilige Schere 10 dargestellt, bestehend aus einer einen ersten Instrumenten-Teil bildenden unteren Scherenhälfte 12 und einer einen zweiten Instrumenten-Teil bildenden oberen Scherenhälfte 11. Die Scherenhälften 11,12 sind mit einer eine Schraubverbindung 15 bildenden Gewindeschraube 16 gelenkig miteinander verbunden. Der Schraubenkopf 17 ist, wie in Fig. 3 gezeigt, linsenartig konvex nach außen gewölbt ausgebildet. In dem Schraubenkopf 17 sind als Angriffseinrichtung drei achsparallele Bohrungen 18 angeordnet, die alle auf demselben Radius in gleichen Winkelabständen zueinander angeordnet sind. Alle Bohrungen 18 haben den gleichen Durchmesser und sind axial durch den Schraubenkopf 17 durchgehend und parallel zur Schraubenlängsachse verlaufend.

Wie in Figur 3 gezeigt, ist die Gewindeschraube 16 mit ihrem Gewindeteil 20 in eine Gewindebohrung 19 der unteren Scherenhälfte 12 eingeschraubt. In einer kreisförmigen Öffnung 21 der oberen Scherenhälfte 11 ist ein Rollenlager 22 eingesetzt, dessen Außenring 23 fest in der Öffnung 21 sitzt. Der Innenring 24 des Rollenlagers 22 ist axial zwischen der unteren Scherenhälfte 12 und einem ringartigen Absatz 26 an der dem Gewinde 20 zugewandten Seite des Schraubenkopfes 17 festgeklemmt. Durch den Absatz 26 wird sichergestellt, daß der Schraubenkopf 17 nicht mit dem Außenring 23 des Rollenlagers 22 in Berührung kommt. Dadurch wird eine weitgehend reibungsfreie Drehbarkeit des Gelenkes 15 ermöglicht.

Zum Festziehen und Lösen der Gewindeschraube 16 ist als Schraubendreher-Werkzeug ein Drehhebel 30 vorgesehen, an dessen Kopfende 31 drei parallele Stifte gleichen Durchmessers und gleicher Höhe angeordnet sind (Fig. 2). Die drei Stifte 32 bilden zusammen die Eckpunkte eines gleichseitigen Dreiecks.

Zum Drehen der Gewindeschraube 16 werden die drei Stifte 32 in die drei Bohrungen 18 gesteckt. Mit dem Drehhebel 30 können hohe Drehmomente auf die Gewindeschraube 16 übertragen werden. Mit dem Drehhebel 30 kann daher die Gewindeschraube 16 einfach gelöst und dosiert und, falls erforderlich, sehr fest wieder angezogen werden.

Durch die Nichtverwendung einer genormten Schlitz-, Kreuzschlitz- oder Innensechskantschraube für die Schraubverbindung kann die Gelenk-Gewindeschraube 16 mit üblichen Schraubendrehern nicht von unbefugten Personen unsachgemäß verstellt werden. Zum Festziehen und Lösen der Gewindeschraube 16 muß ein Spezialwerkzeug, nämlich der Drehhebel 30 verwendet werden, der nur dazu autorisiertem Fachpersonal zur Verfügung steht.

Die Scherenhälften 11,12, die Gewindeschraube 16 und das Schraubendreher-Werkzeug 30 sind aus Metall gefertigt, können jedoch auch aus anderen Materialien bestehen.

Der Schraubenkopf bietet wegen seiner ungenormten und ungewöhnlichen Gestaltung die Möglichkeit als wiedererkennbares Zeichen einer Produktserie zu dienen.

## Patentansprüche

1. Schraubverbindung zum gelenkigen Verbinden zweier Teile (11,12) eines mechanischen Instrumentes (10), mit
einem ersten Instrumenten-Teil (11) und einem daran gelenkig befestigten zweiten Instrumenten-Teil (12), und
einer an dem ersten Teil (11) abgestützten Gewindeschraube (16), die an ihrem einen axialen Ende einen Schraubenkopf (17) mit einer Angriffseinrichtung zum Ansetzen eines Schraubendreher-Werkzeuges (30) aufweist und in ein Gewinde (19) des zweiten Teils (12) eingreift,
wobei als Angriffseinrichtung mindestens zwei achsparallele Bohrungen (18) in dem Schraubenkopf (17) vorgesehen sind, in die entsprechende Stifte (32) eines Schraubendreher-Werkzeugs (30) einsteckbar sind,
**dadurch gekennzeichnet,**
**daß** das Gelenk ein Gelenk-Rollenlager (22) mit einem Innenring (24) aufweist, und
**daß** der Schraubenkopf (17) an seiner dem Gewinde zugewandten Seite einen ringartigen Absatz (26) zum Abstützen auf dem Rollenlager-Innenring (24) aufweist, der axial zwischen dem zweiten Teil (12) und dem Schraubenkopf-Absatz (26) festgeklemmt ist.

2. Schraubverbindung nach Anspruch 1, **dadurch gekennzeichnet, daß** die Schraubverbindung eine Gelenkverbindung einer Schere (10) ist.

3. Schraubverbindung nach Anspruch 1 oder 2, **dadurch gekennzeichnet, daß** der Schraubenkopf (17) konvex nach außen gewölbt ist.

4. Schraubverbindung nach einem der Ansprüche 1-3, **dadurch gekennzeichnet, daß** alle Bohrungen (18) auf demselben Radius liegen und in gleichen Winkelabständen zueinander angeordnet sind.

5. Schraubverbindung nach einem der Ansprüche 1-4, **dadurch gekennzeichnet, daß** alle Bohrungen (18) den gleichen Durchmesser aufweisen.

6. Schraubverbindung nach einem der Ansprüche 1-5, **dadurch gekennzeichnet, daß** die Gewindeschraube (16) aus Metall besteht.

## Claims

1. A screw connection for hingedly connecting two parts (11,12) of a mechanical instrument (10) or tool, comprising
a first instrument part (11) and a second instrument part (12) hingedly connected thereto, and
a threaded screw (16) supported at the first part (11) and having one axial end provided with a screw head (17) with an engaging means for applying a screw driver tool (30), the threaded screw (16) engaging in a thread (19) of the second part (12),
at least two axially parallel bores (18) being provided in the screw head (17) as the engaging means, into which bores corresponding pins (32) of a screw driver tool (30) may be inserted,
**characterized in**
**that** the hinge comprises a hinge roller bearing (22) with an inner ring (24), and
the side of the screw head (17) facing the thread (20) is provided with an annular shoulder (26) for support on the inner ring (24) of the roller bearing (22), which is clamped axially between the second part (12) and the screw head shoulder (26).

2. The screw connection of claim 1, wherein the threaded screw (16) is provided for the hinged connection of a pair of scissors (10).

3. The screw connection of claim 1 or 2, wherein the screw head (17) is convexly curved outward.

4. The screw connection of any one of Claims 1 to 3, wherein all bores (18) are on the same radius and have the same angular distance from each other.

5. The screw connection of any one of Claims 1 to 4, wherein all bores (18) have the same diameter.

6. The screw connection of any one of Claims 1 to 5, wherein the threaded screw (16) is made of metal.

## Revendications

1. Assemblage par vis pour assembler de façon articulée deux éléments (11, 12) d'un instrument mécanique (10), comprenant un premier élément d'instrument (11) et un deuxième élément d'instrument (12) fixé de façon articulée sur celui-ci, et une vis filetée (16) supportée par le premier élément (11), qui à l'une de ses extrémités axiales présente une tête de vis (17) avec un dispositif d'attaque pour la mise en place d'un outil tournevis (30), et qui est en prise avec un filet (19) du deuxième élément (12), au moins deux perçages (18) d'axes parallèles étant prévus dans la tête de vis (17) en tant que dispositif d'attaque, dans lesquels peuvent être introduites des pointes (32) correspondantes d'un outil tournevis (30), **caractérisé en ce que** l'articulation présente un roulement à rouleaux articulé (22) comportant une bague intérieure (24), et **en ce que** la tête de vis (17), sur sa face tournée vers le filet, présente un palier en forme d'anneau (26) pour s'appuyer sur la bague intérieure (24) du roulement à rouleaux, qui est enserré axialement entre le deuxième élément (12) et le palier (26) de la tête de vis.

2. Assemblage par vis selon la revendication 1, **caractérisé en ce que** l'assemblage par vis est un assemblage articulé de ciseaux (10).

3. Assemblage par vis selon la revendication 1 ou 2, **caractérisé en ce que** la tête de vis (17) est courbée de manière convexe vers l'extérieur.

4. Assemblage par vis selon l'une des revendications 1 à 3, **caractérisé en ce que** tous les perçages (18) se situent sur le même rayon et sont disposés à des distances angulaires identiques les uns par rapport aux autres.

5. Assemblage par vis selon l'une des revendications 1 à 4, **caractérisé en ce que** tous les perçages (18) présentent le même diamètre.

6. Assemblage par vis selon l'une des revendications 1 à 5, **caractérisé en ce que** la vis filetée (16) est en métal.
